# FASCICULE DE BREVET EUROPEEN

(11) **EP 3 302 829 B1**
(45) Date de publication et mention de la délivrance du brevet: **04.09.2019**
(21) Numéro de dépôt: 16731214.9
(22) Date de dépôt: 19.05.2016
(51) Int. Cl.: B07C 3/02

(54) **ÉQUIPEMENT DE TRI D'OBJETS EN SACS**
VORRICHTUNG ZUM SORTIEREN VON OBJEKTEN IN SÄCKE
DEVICE FOR SORTING OBJECTS INTO BAGS

(30) Priorité: 04.06.2015 FR 1555086
(43) Date de publication de la demande: 11.04.2018
(73) Titulaire: Solystic, 92220 Bagneux (FR)
(72) Inventeur: CHIROL, Luc, 75016 Paris (FR); MIETTE, Emmanuel, 95210 Saint Gratien (FR)
(74) Mandataire: Prugneau, Philippe
(86) Numéro de dépôt international: PCT/FR2016/051179
(87) Numéro de publication internationale: WO 2016/193565

(56) Documents cités:
- WO-A1-2014/057182

## Description

### Domaine technique

L'invention concerne le domaine du tri d'objets, et plus particulièrement un équipement de tri postal pour trier des objets postaux, tels que des colis, dans des réceptacles ouverts sur le dessus, comme des sacs.

### Technique antérieure

Actuellement, le tri à flux réduit des colis postaux est faiblement automatisé dans les centres de tri.

On entend ici par flux réduit, un flux pouvant atteindre jusqu'à trois mille colis par heure.

Ce type de tri est généralement effectué manuellement par des Opérateurs spécialisés qui prélèvent un à un les colis depuis un point de prélèvement, qui reconnaissent visuellement une destination apposée sur un colis qui a été prélevé puis, en fonction d'un certain plan de tri, déterminent le sac de tri dans lequel le colis doit être déposé.

Les sacs de tri peuvent ensuite être récupérés pour une distribution selon la tournée du facteur ou encore être vidés pour une nouvelle passe de tri des colis.

Ainsi, la cadence de tri des colis dans ces centres de tri dépend essentiellement du nombre d'Opérateurs qui travaillent et de leur aptitude à trier les colis dans les sacs en fonction du plan de tri.

On comprendra également que le changement de plans de tri à chaque passe de tri demande un effort de concentration conséquent aux Opérateurs ce qui peut entraîner des erreurs de tri.

Notons également qu'il existe des machines de tri entièrement automatisées dites « trieurs en ligne à sabots » utilisées pour le tri de certains articles postaux.

Ces machines sont toutefois peu adaptées pour le tri postal à flux réduit du fait de leur coût trop élevé et de l'emprise au sol trop important de ces machines.

Il existe également des équipements de tri d'objets pour le tri des objets dans des réceptacles ouverts sur le dessus comme décrit dans le document WO2014057182. Ces équipements comprennent des chariots/navettes autonomes en déplacement pour transporter chacun un objet d'un point de chargement vers un réceptacle, les chariots/navettes présentant chacun un plateau de portage pour un objet apte à surplomber l'ouverture de dessus d'un réceptacle.

### Exposé de l'invention

Le but de l'invention est donc d'apporter une solution pour limiter l'intervention des Opérateurs dans un tri postal de colis tout en garantissant une bonne cadence de tri des colis.

Le but est également de proposer une solution automatisée fiable et rentable pour un traitement des colis à faible flux et qui est adaptée pour gérer de manière dynamique plusieurs passes de tri.

L'idée à la base de l'invention est de déplacer les colis ou autre objets postaux avec des chariots-navettes entre un point de chargement des colis et les sacs, les sacs et les chariots-navettes étant adaptés pour que la dépose d'un colis depuis un chariot dans un sac se fasse par simple gravité.

A cet effet, l'invention a pour objet un équipement de tri d'objets pour le tri des objets dans des réceptacles ouverts sur le dessus, caractérisé en ce qu'il comprend des chariots-navettes autonomes en déplacement pour transporter chacun un objet d'un point de chargement vers un réceptacle, en ce que les chariots-navettes présentent chacun un plateau de portage pour un objet postal apte à surplomber l'ouverture de dessus d'un réceptacle, et en ce qu'il est prévu un moyen de retenue au-dessus des ouvertures des réceptacles qui laisse un espace pour le passage d'un plateau de portage entre le moyen de retenue et l'ouverture d'un réceptacle et qui retient l'objet chargé sur le plateau de portage au dessus de l'ouverture du réceptacle lorsque le chariot-navette s'éloigne du réceptacle de façon à ce que l'objet tombe par gravité dans le réceptacle.

Le dispositif de tri des objets selon l'invention peut avantageusement présenter les particularités suivantes :
- les réceptacles sont alignés en rangée et chaque chariot-navette est commandé pour se déplacer le long de la rangée de réceptacles de telle manière que le plateau de portage du chariot-navette surplombe successivement les réceptacles;
- les réceptacles sont des sacs suspendus à des potences et les chariots-navettes ont la forme d'un U couché avec une branche inférieure du U qui est adaptée pour passer sous les sacs suspendus et une branche supérieure du U qui est adaptée pour surplomber les ouvertures des sacs;
- le moyen de retenue est une palette fixe suspendue au dessus des sacs.

### Description sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une représentation schématique d'un équipement de tri selon l'invention vu de profil;
- la figure 2 est une représentation schématique d'un équipement de tri selon l'invention vu de dessus.

### Description des modes de réalisation

L'équipement de tri selon l'invention est conçu pour trier à flux réduit des objets et plus particulièrement des objets postaux non mécanisables de type colis.

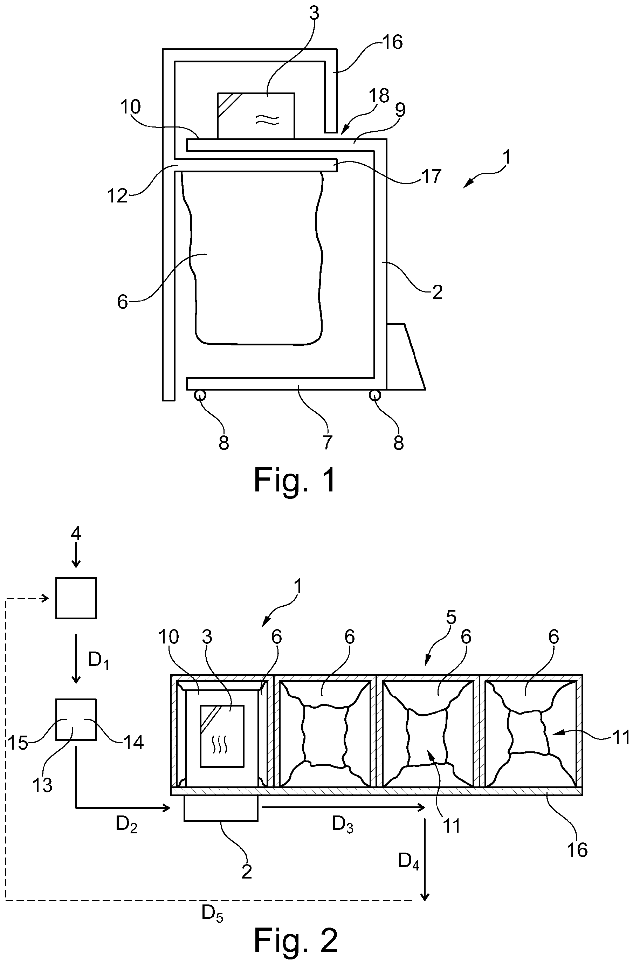

En référence aux figures 1 et 2, l'équipement de tri selon l'invention 1 comprend des chariots-navettes 1 constitués chacun d'un chariot 2A pour le portage d'un colis 3 et d'une navette 2B pour le déplacement du colis 3 posé sur le chariot 2A.

Le chariot 2A et la navette 2B peuvent être prévus pour être attelables ou non.

Chaque navette 2B est une navette autonome capable de se déplacer entre un point de chargement 4 des colis 3 montré sur la figure 2 à des points de dépose 5 des colis où sont disposés des réceptacles 6 présentant chacun une ouverture sur le dessus, ici des sacs suspendus.

Les réceptacles pourraient aussi être des bacs, des caisses telles que des caisses-palettes ou analogue.

Comme visible sur la figure 1, chaque chariot 2A a une forme en U couché avec une branche inférieure 7 au-dessus des roulettes 8 de la navette motorisée 2B et une branche supérieure 9 sur laquelle est fixé un plateau 10 de portage horizontal.

Comme visible sur la figure 1, le plateau 10 sur la branche 9 du U est apte à venir surplomber l'ouverture de dessus du sac 6 quand la branche inférieure 7 du U est sous le sac 6.

Sur la figure 2, on voit l'ouverture 11 du dessus des sacs 6, lesquels sont alignés en une ou plusieurs rangées longitudinales. On a représenté sur la figure 2 qu'une seule rangée de sacs.

Les sacs 6 en rangée constituent donc des sorties de tri pour un processus de tri postal des colis suivant un certain plan de tri en une ou plusieurs passes de tri.

On peut avoir des réceptacles 6 de différentes tailles adaptées à des taux de remplissage en colis différents suivant les sorties de tri.

Sur la figure 2, on a illustré de façon très schématique un système 13 de contrôle/commande des chariots-navettes 1 qui inclut ici un système de reconnaissance automatique d'adresse 14 avec une caméra 15 qui montée en hauteur pour pouvoir observer la face supérieure de chaque colis 6 placé sur un plateau de portage 10 d'un chariot-navette 1 passant sous la caméra.

Il est entendu que les chariots-navettes 1 sont commandés à distance et sans fil par géo-localisation depuis le système 13.

Le système de reconnaissance automatique d'adresse 14 peut être un système classique utilisant un OCR adapté pour reconnaître une adresse de destination du colis à partir d'une image numérique du colis prise par la caméra 15 et contenant cette adresse de destination.

Il est entendu que le système 14 peut aussi être un lecteur de code barres apte à lire des codes barres apposées sur les colis.

Comme visible sur la figure 2, les chariots-navettes 1 sont commandés par le système 13 pour suivre un parcours formé des tronçons D1, D2, D3, D4 et D5.

Le tronçon D1 part du point de dépose 4 d'un colis sur le plateau d'un chariot-navette arrivant par exemple d'une zone de stockage non illustrée.

Le tronçon D1 se termine ici à l'endroit où est situé le système de reconnaissance d'adresse 14.

Le tronçon D2 prolonge le tronçon D1 et fait un angle à 90° pour arriver à une extrémité d'une rangés de sacs ou autres réceptacles.

A l'extrémité du tronçon D2, le chariot-navette 1 se trouve dans l'alignement des sacs 6 et la navette 2A du chariot-navette peut donc longer le bord de cette rangée de sacs en suivant le tronçon longitudinal D3.

Le colis 3 est alors déplacé au-dessus des ouvertures 11 successives des sacs.

Comme visible sur la figure 1, il est prévu au-dessus de chaque ouverture 11 d'un réceptacle un moyen de retenu 16 qui laisse un espace pour le passage d'un plateau de portage entre le moyen de retenue et l'ouverture du réceptacle et qui retient l'objet 3 chargé sur le plateau de portage au-dessus de l'ouverture du réceptacle lorsque le chariot-navette 1 s'éloigne du réceptacle, ici en suivant le tronçon D4 qui est perpendiculaire au tronçon D3.

En éloignant du sac 6 suivant le tronçon D4 le plateau de portage 10 du chariot-navette 1, le colis 3 tombe par gravité dans le sac 6 montré sur la figure 2.

Le moyen de retenue 16 peut se présenter sous la forme d'une palette formée par un bord tombé de la potence de suspension 17 du sac 6 et qui laisse une fente de passage avec le bord de l'ouverture du sac.

On peut aussi comme moyen de retenue, une grande palette qui s'étend sur toute la longueur de la rangée de sacs 6.

Le tronçon D4 se prolonge par un dernier tronçon D5 qui fait un angle droit et qui revient au point de chargement 4.

On comprend donc qu'un plateau 10 d'un chariot-navette est apte à surplomber avec un colis 3 successivement les sacs 6 et quand il arrive au-dessus d'un sac correspondant à une sortie de tri 5, le chariot-navette est reculé suivant le tronçon D4 et le colis 3 retenu par la palette 16 vient tomber par simple gravité dans le sac 6 constituant la sortie de tri.

Avec cet agencement, on peut prévoir qu'un seul Opérateur qui vient charger en colis les chariots-navettes 1 se présentant un par un au point de chargement 4, le tri étant ensuite réalisé de manière-automatique sous le pilotage du système 13.

On peut aussi selon l'invention avoir plusieurs points de chargement 4 des chariots-navettes 1 en colis 3.

Si le tri comporte plusieurs passes de tri, les sacs 6 peuvent être enlevés des potences 17 par l'Opérateur et remplacés par des sacs vides, les sacs pleins étant mis en séquence au point 4 pour une nouvelle passe de tri des colis.

## Revendications

1. Equipement de tri d'objets (3) pour le tri des objets dans des réceptacles (6) ouverts sur le dessus, comprenant des chariots-navettes (1) autonomes en déplacement pour transporter chacun un objet d'un point de chargement (4) vers un réceptacle, en ce que les chariots-navettes présentent chacun un plateau de portage (10) pour un objet apte à surplomber l'ouverture de dessus d'un réceptacle, **caractérisé en ce qu'**il est prévu un moyen de retenue (16) au-dessus des ouvertures des réceptacles qui laisse un espace (18) pour le passage d'un plateau de portage entre le moyen de retenue et l'ouverture d'un réceptacle et qui retient l'objet chargé sur le plateau de portage au dessus de l'ouverture du réceptacle lorsque le chariot-navette s'éloigne du réceptacle de façon à ce que l'objet tombe par gravité dans le réceptacle.

2. Equipement de tri selon la revendication 1, **caractérisé en ce que** les réceptacles sont alignés en rangée et chaque chariot-navette est commandé pour se déplacer le long de la rangée de réceptacles de telle manière que le plateau de portage du chariot-navette surplombe successivement les réceptacles.

3. Equipement de tri selon l'une des revendications précédentes, **caractérisé en ce que** les réceptacles sont des sacs suspendus à des potences (17) et les chariots-navettes ont la forme d'un U couché avec une branche inférieure du U qui est adaptée pour passer sous les sacs suspendus et une branche supérieure du U qui est adaptée pour surplomber les ouvertures des sacs.

4. Equipement de tri selon l'une des revendications précédentes, **caractérisé en ce que** le moyen de retenue (16) est une palette suspendue au dessus des sacs.

5. Equipement de tri selon l'une des revendications précédentes, **caractérisé en ce que** les objets sont des objets postaux.

## Patentansprüche

1. Vorrichtung zum Sortieren von Objekten (3) für das Sortieren der Objekte in an der Oberseite offene Behältnisse (6), umfassend Pendelwagen (1), die sich autonom bewegen, zum Transportieren jeweils eines Objekts von einem Beschickungspunkt (4) zu einem Behältnis, wobei die Pendelwagen jeweils eine Tragplatte (10) für ein Objekt aufweisen, die dafür ausgelegt ist, über die Oberseitenöffnung eines Behältnisses zu ragen, **dadurch gekennzeichnet, dass** sie mit einem Haltemittel (16) über den Öffnungen der Behältnisse versehen ist, welches einen Zwischenraum (18) für die Hindurchbewegung einer Tragplatte zwischen dem Haltemittel und der Öffnung eines Behältnisses frei lässt und welches das auf die Tragplatte geladene Objekt über der Öffnung des Behältnisses zurückhält, wenn sich der Pendelwagen von dem Behältnis entfernt, derart, dass das Objekt durch Schwerkraft in das Behältnis fällt.

2. Vorrichtung zum Sortieren nach Anspruch 1, **dadurch gekennzeichnet, dass** die Behältnisse in einer Reihe ausgerichtet sind und jeder Pendelwagen so gesteuert wird, dass er sich derart entlang der Reihe von Behältnissen bewegt, dass die Tragplatte des Pendelwagens nacheinander über die Behältnisse ragt.

3. Vorrichtung zum Sortieren nach einem der vorhergehenden Ansprüche, **dadurch gekennzeichnet, dass** die Behältnisse Säcke sind, die an Tragarmen (17) aufgehängt sind, und die Pendelwagen die Form eines liegenden "U" haben, mit einem unteren Schenkel des "U", welcher dafür ausgelegt ist, sich unter den aufgehängten Säcken hindurchzubewegen, und einem oberen Schenkel des "U", welcher dafür ausgelegt ist, über die Öffnungen der Säcke zu ragen.

4. Vorrichtung zum Sortieren nach einem der vorhergehenden Ansprüche, **dadurch gekennzeichnet, dass** das Haltemittel (16) eine über den Säcken aufgehängte Palette ist.

5. Vorrichtung zum Sortieren nach einem der vorhergehenden Ansprüche, **dadurch gekennzeichnet, dass** die Objekte postalische Objekte sind.

## Claims

1. Equipment for sorting articles (3), for sorting the articles into receptacles (6) that are open at their tops, comprising shuttle cart and trolley assemblies (1) that are suitable for being moved independently so that each of them conveys an article from a loading point (4) to a receptacle, in that each of the shuttle cart and trolley assemblies has a carrying deck (10) for carrying an article, which deck is suitable for overlying the opening in the top of a receptacle, said equipment being **characterized in that** retaining means (16) are provided above the openings in the receptacles, which retaining means leave a space (18) for allowing a carrying deck to pass between the retaining means and the opening in a receptacle, and retain the article loaded on the carrying deck above the opening in the receptacle when the shuttle cart and trolley assembly moves away from the receptacle in such a manner that the article falls by gravity into the receptacle.

2. Sorting equipment according to claim 1, **characterized in that** the receptacles are lined up in a row and each shuttle cart and trolley assembly is controlled to move along the row of receptacles in such a manner that the carrying deck of the shuttle cart and trolley assembly overlies the receptacles in succession.

3. Sorting equipment according to any preceding claim, **characterized in that** the receptacles are bags suspended from frames (17) and each of the shuttle cart and trolley assemblies is in the shape of a U on its side, with a lower branch of the U-shape that is adapted to go under the suspended bags, and an upper branch of the U-shape that is adapted to overlie the openings in the bags.

4. Sorting equipment according to any preceding claim, **characterized in that** the retaining means (16) are constituted by a paddle suspended above the bags.

5. Sorting equipment according to any preceding claim, **characterized in that** the articles are postal articles.
